# EUROPEAN PATENT SPECIFICATION

(11) **EP 4 225 486 B1**
(45) Date of publication and mention of the grant of the patent: **30.07.2025**
(21) Application number: 21823586.9
(22) Date of filing: 07.12.2021
(51) Int. Cl.: B01J 19/24, B01J 4/00, B01J 19/00, B01J 8/18, B01J 8/12

(54) **REACTOR FOR A GAS-PHASE OLEFIN POLYMERIZATION**
REAKTOR FÜR DIE OLEFINPOLYMERISATION IN DER GASPHASE
RÉACTEUR POUR LA POLYMÉRISATION D'OLÉFINES EN PHASE GAZEUSE

(30) Priority: 09.12.2020 EP 20212671
(43) Date of publication of application: 16.08.2023
(73) Proprietor: Basell Polyolefine GmbH, 50389 Wesseling (DE)
(72) Inventor: PENZO, Giuseppe, 46100 Mantova (IT); DORINI, Maurizio, 44122 Ferrara (IT); RINALDI, Riccardo, 44122 Ferrara (IT); BALESTRA, Enrico, 44123 Ferrara (IT); BONACCORSI, Gian Luca, 44122 Ferrara (IT)
(74) Representative: LyondellBasell
(86) International application number: PCT/EP2021/084630
(87) International publication number: WO 2022/122749

(56) References cited:
- EP-A2- 0 513 816
- EP-B1- 0 856 530
- EP-B1- 1 012 195
- EP-B1- 2 613 873
- WO-A1-2016/020482
- US-A- 4 419 965

## Description

### FIELD OF THE INVENTION

The present disclosure provides a reactor for carrying out a gas-phase olefin polymerization in the presence of a polymerization catalyst, the reactor comprising at least one set of bars for introducing feedstock and/or a barrier stream into the reactor, and a process for carrying out a gas-phase olefin polymerization in the presence of a polymerization catalyst in said reactor.

### BACKGROUND OF THE INVENTION

Gas-phase polymerization is a widely used polymerization technique for gaseous monomers such as ethylene and propylene. Although well-established since the 1960s, due to the high demand of polyolefins, there is still an ongoing effort to improve the process of production, in particular with regard to product quality and yield. One breakthrough, in particular with regard to controlling the molecular weight distribution of the polymer, was achieved by carrying out the polymerization in different polymerization zones. Examples of such multizone polymerization reactors are disclosed in WO 00/02929 A1 and WO 2009/080660 A1 referring to processes for the gas-phase polymerization of α-olefins carried out in two interconnected polymerization zones, wherein the growing polymer particles flow upward through the first of said polymerization zones under fast fluidization conditions, leave said first polymerization zone and enter the second polymerization zone through which the particles flow downward in a densified form, wherein the gas mixture of the first polymerization zone is totally or partially prevented from entering the second polymerization zone by introducing into the upper part of the second polymerization zone a liquid stream having a composition different from the gaseous mixture present in the first polymerization zone.

Although these multizone reactors are well-established in industry, there is the wish to increase the flexibility in tailoring the composition of the olefin polymer, in particular when it comes to improving the polymer property balance. WO 2018/087209 A1 therefore proposes a process for preparing an olefin polymer in the presence of hydrogen in a gas-phase polymerization reactor comprising three or more polymerization zones which differ in the ratio of hydrogen to the sum of olefins in the reaction gas mixture within the polymerization zones.

Independent of the number of polymerization zones, the technique of the multizone reactor relies mainly on the different compositions of the gas mixtures present in the different polymerization zones and the effective separation of those mixtures. It is therefore needed to create effective barriers between the different polymerization zones which prevent the gas mixture present in one polymerization zone from entering another polymerization zone. As indicated in WO 2009/080660 A1, separation can be achieved by way of a barrier stream. However, the effectiveness of such a barrier stream highly depends on the proper introduction of the respective gas or liquid into the reactor, avoiding uneven distribution to achieve a homogenous barrier stream.

Another need often encountered in the gas-phase polymerization of olefins is high monomer conversion and even composition and/or molecular weight distribution of the produced polymers. Further, avoidance of dead zones which may be formed within the reactor in areas where the monomer concentration is insufficient to maintain polymerization is another need constantly considered in the improvement of polymerization reactors.

EP 1 012 195 B1 discloses a process for the gas-phase catalytic polymerization carried out in two interconnected polymerization zones, to which one or more monomers are fed in the presence of a catalyst under polymerization conditions and from which the produced polymer is discharged. The growing polymer particles flow through a first polymerization zone under fast fluidization conditions, leave said first zone and enter a second polymerization zone through which they flow in a densified form under the action of gravity, leave said second zone and are reintroduced into the first polymerization zone, thus establishing a circulation of polymer between the two polymerization zones. In particular, a gas of composition different from that present in the first zone is introduced into the second polymerization zone and it is avoided that the gases present in the first polymerization zone are introduced into the second polymerization zone.

US 4,419,965 A1 discloses a system for the fluidized reinjection of fine particles (carryover) into a fluidized bed combustor. The carryover recirculation system includes a fluidized reinjection bed which is fluidized using clean gas from the induced draft fan outlet boosted by a small auxiliary fan. The fluidized fine particles can be reinjected into the fluidized combustor bed by either dense phase transport or by dilute phase transport.

In order to promote even distribution and enable high monomer conversion,
EP 2 745 925 A1 suggests a settled bed polymerization reactor having several inlet-levels comprising at least one inlet per level for injection of monomer, comonomer, co-reactants and/or inert components distributed over the height of the reactor whereby the distance between two inlet-levels is equal to or lower than 0.25 x height of the reactor and the number of inlet-levels is at least [height of the reactor / (0.25 x height of the reactor)] - 1. A degassing process for removing unpolymerized monomers from olefin polymers in which an inert purge gas is introduced into a purge vessel by a gas distributor which is provided with transversely extending tubes having openings through which the inert purge gas can enter the interior of the purge vessel is disclosed in EP 0 513 816 A2.

Although there have been attempts to address the demands associated with aiming for an even distribution of any component introduced into the reactor, such as monomer feed or barrier stream, there is still a need for improving the polymer flow in the reactor which is prone to interruptions caused by the introduction of the components into the reactor. So far industry has been reluctant to use injectors spanning the whole width of the reactor. Although a more even distribution may be achieved, the injectors present obstacles in the free flow of the polymer particles passing through the reactor, where the polymers can be stopped, grow and form undesired agglomerates.

It is therefore the need of the present disclosure to provide a reactor for
the gas-phase polymerization that allows even distribution of any components introduced into the reactor while at the same time guaranteeing free flow of the polymer particles passing through the reactor.

### SUMMARY OF THE INVENTION

The present disclosure addresses that need by providing a reactor for carrying out a gas-phase olefin polymerization in the presence of a polymerization catalyst, the reactor comprising at least a first polymerization zone adapted and arranged for growing polymer particles to flow upward under fast fluidization or transport conditions and at least a second polymerization zone adapted and arranged for the growing polymer particles to flow downward; and at least one set of bars for introducing feedstock and/or a barrier stream into the second polymerization zone, wherein each bar comprises a hollow space along the length of the bar for conveying the feedstock and/or barrier stream within the bar and has a particle deviating top for preventing accumulation of the polymer particles on the bars, and wherein each bar has openings for distributing the feedstock and/or barrier stream, the openings being arranged along the bottom half of the periphery of the bar.

The particle deviating top of the bar includes a top edge which extends along the length of the bar.

In some embodiments, the bottom half of the periphery of the bar has a particle deviating shape including a bottom edge which extends along the length of the bar.

In some embodiments, each bar comprises a distributing part for distributing the feedstock and/or barrier stream and a deviating part which forms the particle deviating top of the bars and the distributing part is preferably in the shape of a pipe.

In some embodiments, the distributing part is a pipe having a diameter of 25 mm to 100 mm.

In some embodiments, the hollow space comprised in the bar has a center axis which runs along the length of the bar, and the openings are arranged within the part of the bottom half of the periphery of the bar where the angle between a vertical plane through the center axis and a plane passing through an opening and the center axis is from 0° to 70°, preferably from 20° to 50°.

In some embodiments, the openings have a diameter of 0.5 mm to 10 mm, preferably 1.5 mm to 5 mm.

In some embodiments, the particle deviating top of the bar comprises a first planar surface and a second planar surface and the intersection of the first planar surface and the second planar surface forms the top edge, and the dihedral angle (A42) between the surfaces is less than 120°, preferably from 10° to 100°, even more preferred from 30° to 80°.

In some embodiments, the bars of the at least one set of bars are arranged to extend across a part of the width of the second polymerization zone from one side and across a part of the width of the second polymerization zone from the opposite side, leaving a gap between the opposing bars.

In some embodiments, the reactor further comprises at least one set of supports for supporting the bars, preferably for supporting the bars for introducing a barrier stream.

In some embodiments, one end of the bars and/or the supports is adapted to be form-fittingly connected to the wall of the second polymerization zone.

In some embodiments, the bars and/or supports have a surface roughness Ra of no more than 5 µm, preferably 0.1 µm to 5 µm, in particular 0.5 µm to 4 µm, determined according to DIN ISO 25178.

The present disclosure further provides a bar for introducing feedstock and/or a barrier stream into a multizone circulating reactor (MZCR), the bar comprising a hollow space along the length of the bar for conveying the feedstock and/or the barrier stream within the bar and having a particle deviating top for preventing accumulation of the polymer particles on the bar and having openings for distributing the feedstock and/or barrier stream, the openings being arranged along the bottom half of the periphery of the bar.

The present disclosure further provides a process for carrying out a gas-phase olefin polymerization at temperatures from 20°C to 200°C and pressures from 0.5 MPa to 10 MPa in the presence of a polymerization catalyst in the reactor of the present disclosure, the process comprising feeding one or more olefins into the reactor, contacting the olefins and the catalyst under reaction conditions in the at least first polymerization zone and the at least second polymerization zone and collecting the polymer product from the at least second polymerization zone, wherein the growing polymer particles flow upward through the first polymerization zone under fast fluidization or transport conditions, leave the first polymerization zone, and enter the second polymerization zone where the polymer particles flow downward under the action of gravity, leave the second polymerization zone and are at least partially reintroduced into the first polymerization zone, thus circulating between the first polymerization zone and the second polymerization zone, and the second polymerization zone comprises a bed of densified polymer particles, and wherein feedstock and/or a barrier stream is introduced into the second polymerization zone through at least one set of bars.

In some embodiments, the pressure difference between the pressure of the reaction gas in the second polymerization zone and the pressure of the feedstock and/or barrier stream in the hollow space is from 1 to 500 kPa, preferably from 5 to 200 kPa and in particular from 10 to 100 kPa.

### BRIEF DESCRIPTION OF THE DRAWINGS

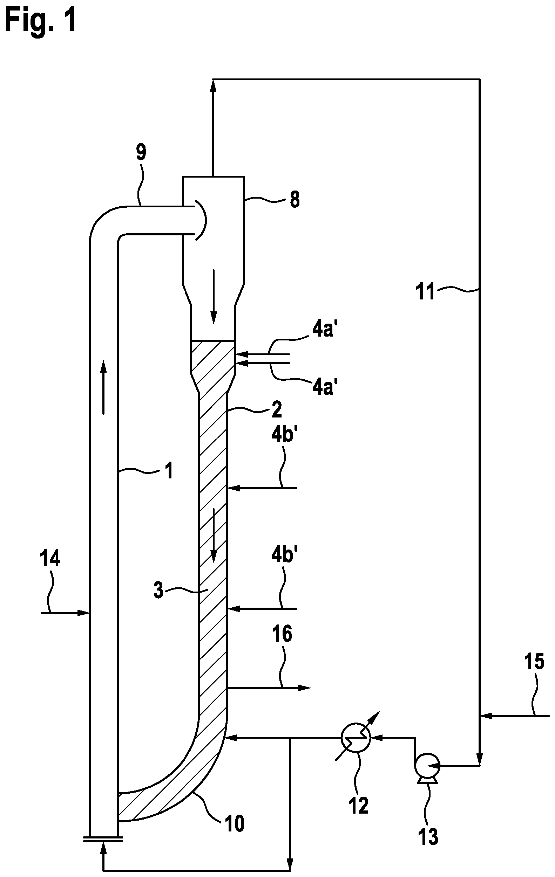

Figure 1 shows a schematic drawing of a multizone circulating reactor of the present disclosure with a first polymerization zone (1), a second polymerization zone (2) comprising a bed of densified polymer particles (3), lines for providing a barrier stream (4a') and lines for providing feedstock (4b').

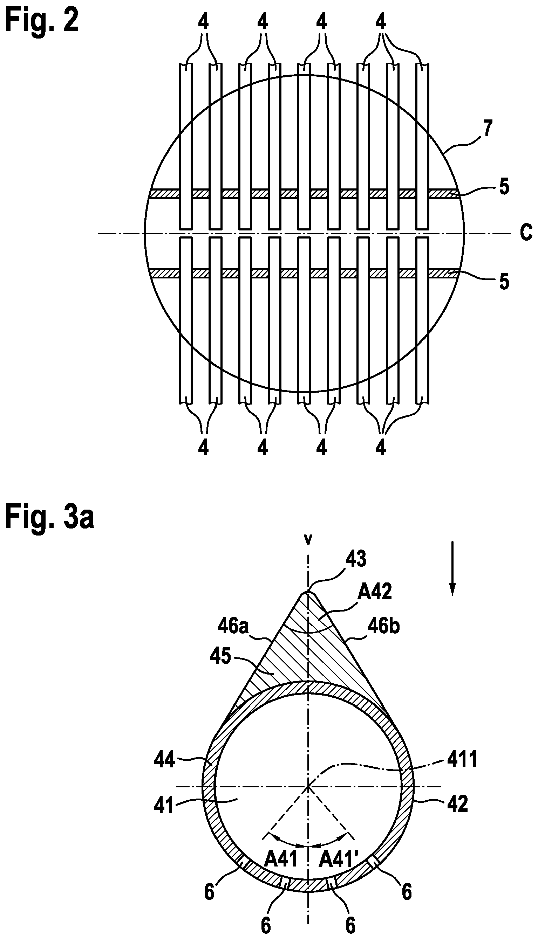

Figure 2 shows a schematic top view of the second polymerization zone (2) depicting bars (4), supports (5) and the reactor wall (7), with c indicating a centerline of the second polymerization zone (2).
Figure 3a shows a schematic cross section of a bar (4) of the present disclosure with v depicting a vertical plane symmetrically dissecting the deviating part (43) and the distributing part (44) of the bar (4) and an arrow indicating the direction of flow of the polymer particles.

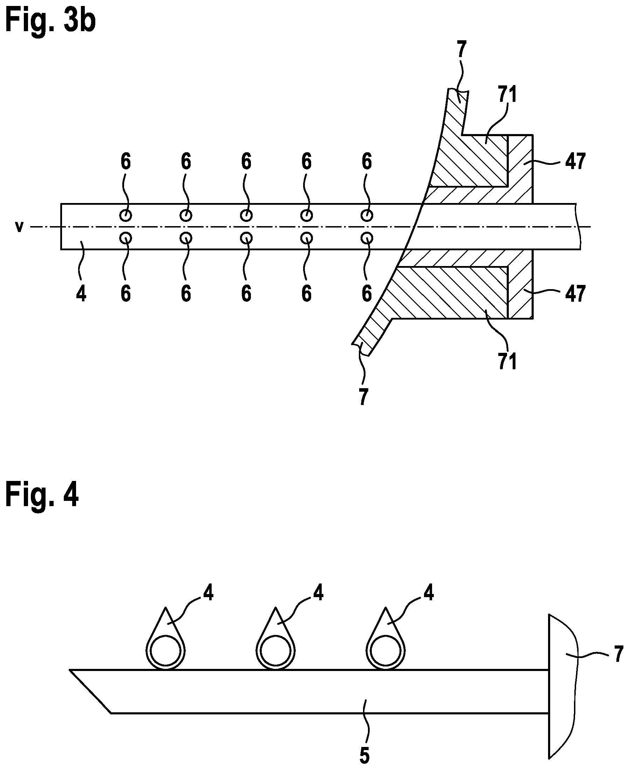

Figure 3b shows a schematic bottom view of a bar (4) of the present disclosure depicting openings (6) arranged at the bottom of the bar (4); with the bar (4) being connected by a flange element (47) to the reactor wall (7) at a position where the reactor wall (7) is equipped with a nozzle (71) and v depicting a vertical plane symmetrically dissecting the bar (4).
Figure 4 shows a schematic side view of a support (5) of the present disclosure sustaining bars (4) of the present disclosure.

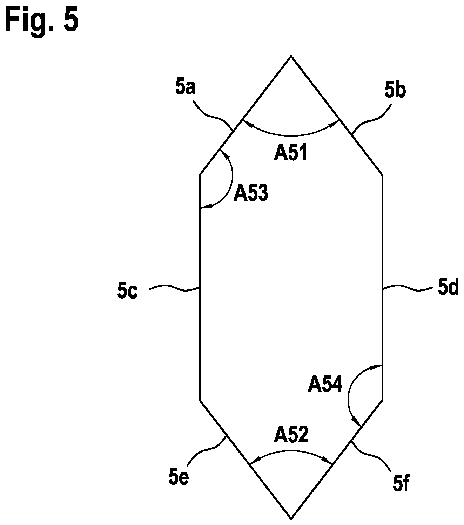

Figure 5 shows a schematic cross section of a preferred embodiment of a support (5) of the present disclosure with angles A51, A52, A53, and A54.

### DETAILED DESCRIPTION OF THE INVENTION

Within the course of the present disclosure, the inventors have found that by adapting the design of the bars used for introducing feedstock and/or a barrier stream into the second polymerization zone of the polymerization reactor, uniform distribution of the introduced components as well as smooth flow of the polymer particles could be achieved, thereby further improving the quality of the obtained polymer.

The present disclosure accordingly provides a reactor for carrying out a gas-phase olefin polymerization in the presence of a polymerization catalyst, the reactor comprising at least a first polymerization zone (1) adapted and arranged for growing polymer particles to flow upward under fast fluidization or transport conditions and at least a second polymerization zone (2) adapted and arranged for the growing polymer particles to flow downward; and at least one set of bars (4) for introducing feedstock and/or a barrier stream into the second polymerization zone (2), wherein each bar (4) comprises a hollow space (41) along the length of the bar (4) for conveying the feedstock and/or barrier stream within the bar and has a particle deviating top for preventing accumulation of the polymer particles on the bars (4), and wherein each bar (4) has openings (6) for distributing the feedstock and/or barrier stream, the openings (6) being arranged along the bottom half of the periphery (42) of the bar (4).

The reactor preferably further comprises a gas/solid separation zone (8) for separating polymer particles from reaction gas, a connecting part (9) for connecting the top of the first polymerization zone (1) to the gas/solid separation zone (8) and a connecting part (10) for connecting the bottom of the second polymerization zone (2) to the bottom of the first polymerization zone (1). The reactor of the present disclosure preferably further comprises a gas recycle line (11) connecting the separation zone (8) to one or more points of reintroduction into the connecting part (10) and/or into the first polymerization zone (1), preferably equipped with a heat exchanger (12) and a compressor (13), a line (14) for feeding a catalyst into the first polymerization zone (1), a line (15) for feeding monomers into the reactor, and a discharge system (16) for discharging polymer from the second polymerization zone (2).

The person skilled in the art is aware that the at least first polymerization zone (1) and the at least second polymerization zone (2) of the apparatus of the present disclosure may be connected in different ways and that more than two polymerization zones may be employed without deviating from the spirit of the present disclosure. Suitable structures and combinations are, for example, described in WO 00/02929 A1 and WO 97/04015 A1.

Olefins which may be polymerized in the reactor of the present disclosure are especially 1-olefins, i.e. hydrocarbons having terminal double bonds, without being restricted thereto. Preference is given to non-polar olefinic compounds. Particular preferred 1-olefins are linear or branched C₂-C₁₂-1-alkenes, in particular linear or branched C₂-C₁₀-1-alkenes such as ethylene, propylene, 1-butene, 1-pentene, 1-hexene, 1-heptene, 1-octene, 1-decene or branched C₂-C₁₀-1-alkenes such as 4-methyl-1-pentene, conjugated and nonconjugated dienes such as 1,3-butadiene, 1,4-hexadiene or 1,7-octadiene. It is also possible to polymerize mixtures of various 1-olefins. Suitable olefins also include one in which the double bond is part of a cyclic structure which can have one or more ring systems. Examples are cyclopentene, norbornene, tetracyclodode-cene or methylnorbornene or dienes such as 5-ethylidene-2-norbornene, norbornadiene or ethyl-norbornadiene. It is also possible to polymerize mixtures of two or more olefins.

The reactor of the present disclosure can be used for the homopolymerization or copolymerization of ethylene or propylene and the reactor is in particular suitable for the homopolymerization or copolymerization of ethylene. Preferred comonomers in propylene polymerization are up to 40 wt.-% of ethylene, 1-butene and/or 1-hexene, preferably from 0.5 to 35 wt.-% of ethylene, 1-butene and/or 1-hexene. As comonomers in ethylene polymerization, preference is given to using up to 20 wt.-%, more preferably 0.01 to 15 wt.-% and especially from 0.05 to 12 wt.-% of C₃-C₈-1-alkenes, in particular 1-butene, 1-pentene, 1-hexene and/or 1-octene. Particular preference is given to polymerizations in which ethylene is copolymerized with from 0.1 to 12 wt.-% of 1-hexene and/or 1-butene.

Due to the special design of the bars (4) used for introducing feedstock and/or a barrier stream into the second polymerization zone (2), an even distribution of the respective component is achieved while at the same time maintaining an uninterrupted flow of the polymer particles passing through the reactor. The set of bars (4) are preferably arranged at different elevations within the second polymerization zone (2). The location of the bars (4) within the second polymerization zone (2) may be varied, depending on the specific function of the bars (4). In this regard, the bars (4) belonging to one set of bars are preferably arranged at the same elevation.

The bars (4) employed in the reactor according to the present disclosure comprise a hollow space (41) along the length of the bar (4) for conveying the feedstock and/or the barrier stream within the bar (4). Each bar (4) has further openings (6) for distributing the feedstock and/or barrier stream. The openings (6) are arranged along the bottom half of the periphery (42) of the bar (4). The openings (6) so allow that the feedstock and/or the barrier stream conveyed within the bar (4) can exit the hollow space (41) within the bar (4) and is distributed into the second polymerization zone (2), Each bar (4) comprises preferably a distributing part (44) for distributing the feedstock and/or barrier stream and the distributing part (44) is preferably in the shape of a pipe. The arrangement of the openings (6) along the bottom half of the periphery (42) of the bar (4) provides an equal distribution of the feedstock and/or barrier stream over the whole width of the second polymerization zone (2). The pipe preferably has a diameter of 25 to 100 mm.

It was surprisingly found that even distribution could be achieved by arranging the openings (6) in a particular pattern. Therefore, in preferred embodiments of the present disclosure, the hollow space (41) comprised in the bar (4) has a center axis (411) which runs along the length of the bar (4) and the openings (6) are arranged within the part of the bottom half of the periphery (42) of the bar (4) where an angle (A41, A41') between a vertical plane (v) through the center axis (411) and a plane passing through an opening (6) and the center axis (411) is from 0° to 70°, preferably from 20° to 50°.

In preferred embodiments of the present disclosure, the openings (6) in the distributing part (44) have a diameter of 0.5 mm to 10 mm, preferably 1.5 mm to 5 mm. It was surprisingly found that keeping the size of the openings (6) within the claimed range, clogging of the openings as well as undesired accumulation of the distributed component could be avoided.

The bars (4) employed in the reactor according to the present disclosure have a particle deviating top to prevent accumulation of polymer particles on the bars (4). The particle deviating top of the bar (4) includes a top edge (43) which extends along the length of the bar (4). The particle deviating top of the bar (4) preferably comprises a first planar surface (46a) and a second planar surface (46b) and the intersection of the first planar surface (46a) and the second planar surface (46b) forms the top edge (43), and the dihedral angle (A42) between the surfaces (46a, 46b) is less than 120°, preferably from 10° to 100°, even more preferred from 30° to 80°. The particle deviating top of the bar (4) a is preferably formed by a deviating part (45) which is arranged on top a of distributing part (44).

In preferred embodiments of the present disclosure, the bars (4) not only have a particle deviating top but also the bottom half of the periphery (42) of the bar (4) has a particle deviating shape preferably including a bottom edge for ensuring free flow of the polymer particles. In even more preferred embodiments of the present disclosure, the bottom half of the periphery (42) of the bar (4) has a semicylindrical shape,

In order to ensure even distribution, preferably the whole width of the second polymerization (2) is covered by bars (4). Preferably, the bars (4) are attached to one side of the second polymerization zone (2) and extend into the second polymerization zone (2) towards the opposite side.

In preferred embodiments, the bars (4) bridge the width of the second polymerization zone (2) and extend across the second polymerization zone (2) to the opposite side. The bars (4) then preferably form a gap between the end of each bar (4) and the opposite reactor wall, the gap being preferably no more than 200 mm, more preferably 10 to 200 mm, even more preferably 20 to 100 mm, in particular 30 to 80 mm. It was surprisingly found that by leaving a small gap between the end of the bar (4) and the reactor wall (7), the flow of the polymer particles could be further stabilized.

In particular in case of large reactors, the mechanical stability and robustness of the bars (4) are important factors which ensure a long lifetime of the bars (4) and the reactor and a smooth production cycle. It was surprisingly found that the mechanical stability of the bars (4) could be improved if instead of using a single bar spanning the width of the second polymerization zone (2), shorter bars in a special arrangement were used. Therefore, in especially preferred embodiments, the bars (4) of one set of bars are arranged to extend only partially across the width of the second polymerization zone (2) from one side of the second polymerization zone (2) and only partially across the width of the second polymerization zone (2) from the opposite side, leaving a gap between the opposing bars (4). Preferably, the opposing bars (4) are arranged at the same elevation within the second polymerization zone (2). Preferably, the length of one bar (4) corresponds to the length of its counterpart extending from the opposite side of the second polymerization zone (2). Preferably, the gap between the opposing bars (4) is located along a centerline (c) of the second polymerization zone (2). The centerline (c) of the second polymerization zone (2) according to the present disclosure is to be understood as any straight line passing through the center of the second polymerization zone (2) at its largest expansion. The gap between the opposing bars (4) is preferably no more than 200 mm, more preferably 10 to 200 mm, even more preferably 20 to 100 mm, in particular 30 to 80 mm.

The number of sets of bars (4) as well as their arrangement in the reactor of the present disclosure may be adapted according to need. In cases were more than one set of bars (4) is present, the sets of bars (4) are preferably arranged on top of one another, especially preferred in a staggered manner. Staggered manner as used in the present disclosure is to be understood as the bars (4) of one set being located in between the free spaces created by the bars (4) of the set below or above the respective set of bars (4). Preferably, the bars (4) of each set are equally interspaced and arranged to be parallel to each other.

In preferred embodiments, the bars (4) employed in the reactor according to the present disclosure are used for introducing a barrier stream, e.g. provided by a line (4a'), into the second polymerization zone (2) for preventing the gas mixture present in the first polymerization zone (1) from entering the second polymerization zone (2). These barrier stream bars are preferably arranged at the top part of the second polymerization zone (2), the number of sets of bars (4) for introducing a barrier stream being at least one, preferably 2 to 5, more preferably 2 to 3, the barrier stream bars of each set being arranged at the same elevation. Each set of barrier stream bars preferably comprises 2 to 20, more preferably 4 to 12 barrier stream bars. The different sets of bars (4) for introducing a barrier stream are preferably arranged at different elevations within the top part of the second polymerization zone (2), the distance between each set being preferably 100 to 3000 mm, more preferably 300 to 1000 mm. The barrier stream may be a gas barrier stream, a liquid barrier stream or a gas/liquid barrier stream.

In further preferred embodiments, the second polymerization zone (2) comprises a bed of densified polymer particles (3). In these embodiments, the bars (4) for introducing a barrier stream are preferably arranged below the surface of the bed of densified polymer particles (3). In especially preferred embodiments, the barrier stream bars are submerged within the bed of densified polymer particles (3). The distance between the topmost set of barrier stream bars and the surface of the bed of densified polymer particles (3) is preferably more than 100 mm, preferably more than 500 mm.

In alternatively preferred embodiments of the present disclosure, the bars (4) are used for introducing feedstock, e.g. provided by a line (4b'), into the second polymerization zone (2). These feedstock bars are preferably arranged at different elevations within the second polymerization zone (2), especially below the lowest set of barrier stream bars (4a). The number of sets of bars (4) for introducing the feedstock into the second polymerization zone (2) is preferably 1 to 20, more preferably 3 to 10. Each set of feedstock bars preferably comprises 1 to 10, preferably 2 to 7 bars (4). The feedstock preferably comprises the monomer to be polymerized and optionally one or more further components, preferably in a ratio of 5:95 to 100:0, the one or more further components being preferably selected from the group consisting of inert components, comonomer and hydrogen.

In further preferred embodiments, the reactor according to the present disclosure comprises at least 1, preferably 2 to 5, more preferably 2 to 3, sets of bars (4) for introducing a barrier stream and 1 to 20, preferably 3 to 10 sets of bars (4) for introducing feedstock.

In order to ensure mechanical stability of the bars, the reactor according to the present disclosure preferably further comprises at least one set of supports (5) for supporting the bars (4). The supports are preferably in direct contact with the bars (4). The supports (5) are preferably arranged underneath the bars (4). In order to ensure sufficient support, the supports (5) are preferably arranged perpendicular to the bars (4). In preferred embodiments, the supports (5) are especially employed for supporting the bars (4) for introducing a barrier stream.

The length of the supports (5) can be selected according to the size of the reactor. In some embodiments, the supports (5) extend across the whole width of the second polymerization zone (2). In other embodiments, especially in larger reactors, it is preferred that the supports (5) extend partially across the width of the second polymerization zone (2) from one side and partially across the width of the second polymerization zone (2) from the opposite side, the opposing supports (5) being on the same elevation. This way, a gap is created between the opposing supports (5). The gap between the opposing supports (5) is preferably no bigger than 600 mm, preferably no bigger than 500 mm.

The supports (5) are attached to the wall (7) of the reactor and extend horizontally therefrom. There is therefore the need to limit the weight of the supports (5) while at the same time ensuring sufficient mechanical stability to sustain the bars (4). It was surprisingly found that both aims could be achieved by choosing a special design of the supports (5). In preferred embodiments, the cross section area of the supports (5) therefore decreases along at least part of their longitudinal direction. Preferably the end of the supports (5) having the smallest cross section is the one being farthest from the connection site on the wall (7) of the reactor.

In preferred embodiments, the supports (5) are especially used for supporting the bars (4) for introducing a barrier stream, the ratio of barrier stream bars to supports (5) being preferably 2:1 to 10:1, more preferably 2:1 to 4:1. The ratio of barrier stream bars to supports (5) allows for sufficient mechanical stability while at the same time guaranteeing undisturbed flow of the polymer particles in the second polymerization zone (2).

Although the supports (5) may be necessary for providing sufficient mechanical stability, the supports present a further obstacle in the flow of the polymer particles. Within the course of the present disclosure, special care was therefore taken in designing the supports (5) in order to minimize any impact on the polymer flow. Therefore, in preferred embodiments, the shape of the supports (5) is adapted to prevent accumulation and ensure free flow of the polymer particles. In preferred embodiments, the supports (5) are therefore diamond shaped. In further preferred embodiments, the supports (5) are in the form of a hexagonal prism extending horizontally from the wall (7) of the reactor according to the present disclosure. Preferably, the supports (5) are shaped to have two side faces (5c, 5d), preferably arranged parallel to each other, two top faces (5a, 5b) spanning an angle A51 of less than 90° and two bottom faces (5e, 5f) spanning an angle A52 of less than 90°. In order to ensure slip-off of the polymer particles, an angle A53 between the top faces (5a, 5b) and the side faces (5c, 5d) and/or an angle A54 between the bottom faces (5e, 5f) and the side faces (5c, 5d) is greater than 90°. Further, the side faces (5c, 5d) are preferably arranged to be aligned with the direction of the flow of the polymer particles. The special design of the supports (5) ensures undisturbed flow of the polymer particles and prevents the formation of dead spaces within the polymerization zone.

The geometrical shape of the supports may be further optimized. In preferred embodiments, the length of the first top face (5a) is equal to the length of the second top face (5b). Also, the length of the first side face (5c) may be equal to the length of the second side face (5d) and/or the length of the first bottom face (5e) may be equal to the length of the second bottom face (5f).

The different angles of the supports (5) may also be adapted to prevent accumulation of the polymer particles. In one embodiment, the angles A51 and A52 may be the same. In an alternative embodiment, the angles A51 and A52 may be different. For optimal slip-off, the angle A51 is preferably bigger than the angle A52. Preferably, angle A51 is 10° to 80°, preferably 50° to 70°. Further preferred, angle A52 is 10° to 50°, preferably 20° to 40°.

The bars (4) and the supports (5) extend from the wall (7) of the reactor. Within the course of the present disclosure, it turned out that the connection site of the bars (4) and supports (5) with the reactor wall (7), respectively, may cause further disturbance in the polymer flow, locally fluidizing the polymer particles, thus interrupting the regular flow of the polymer particles along the second polymerization zone (2). It is therefore advantageous that one end of each bar (4) and/or support (5) is adapted to be form-fittingly connected to the wall (7) of the reactor. Being form-fittingly connected to the wall means for the end of the bar (4) or the support (5) connected to the wall that this end is shaped in a way that continuity of the inner surface of the reactor is provided and any part of the bar (4) or the support (5) extending from the inner surface of the reactor within the interior of the reactor has the shape of the bar (4) or the support (5). In preferred embodiments, connection of the bars (4) and/or supports (5) is realized by introducing each bar (4) and/or support (5) through a nozzle (71), which is integrated in the reactor wall (7), into the reactor and form-fittingly securing the bars (4) and/or supports (5) in the nozzle (71) by means of an adapter, the adapter being preferably in the form of a flange element (47). By fastening the bars (4) and/or supports (5) as described, irregularities at the connection site could be avoided and a smooth connection could be ensured.

The flow of the polymer particles, in particular in the second polymerization zone (2) could be further improved by selecting appropriate materials for the bars (4) and/or supports (5). In preferred embodiments of the present disclosure, the bars (4) and/or supports (5) are made from metal, the metal preferably being selected from the group consisting of low temperature steel and stainless steel. This way it was possible to guarantee both, the mechanical stability as well the appropriate surface finish to ensure a smooth flow of the polymer particles. In order to avoid any additional disturbance not only of the polymer flow but also of the gas flow in the second polymerization zone (2), the bars (4) and/or supports (5) preferably have a surface roughness Ra of no more than 5 µm, preferably 0.1 µm to 5 µm, in particular 0.5 µm to 4 µm, determined according to DIN ISO 25178.

The reactor of the present disclosure may be part of a larger assembly, for example a series of reactors. In particularly preferred embodiments, the reactor is further connected to an additional reactor, in particular to a fluidized bed reactor (FBR). Suitable combinations of such series include a fluidized-bed reactor followed by an reactor according to the present disclosure or an reactor according to the present disclosure followed by a fluidized-bed reactor. In this way it is possible to integrate the reactor according to the present disclosure into a series of reactors designed for the polymerization of ethylene as well as a series of reactors designed for the polymerization of propylene.

In a further aspect, the present disclosure provides a bar for introducing feedstock and/or a barrier stream into a polymerization reactor, in particular a multizone circulating reactor (MZCR), the bar comprising a hollow space along the length of the bar for conveying the feedstock and/or the barrier stream within the bar, having a particle deviating top for preventing accumulation of the polymer particles on the bar, and having openings for distributing the feedstock and/or barrier stream, the openings being arranged along the bottom half of the periphery of the bar. The bar comprises preferably a distributing part and the distributing part is preferably in the shape of a pipe with openings for distributing the feedstock and/or barrier stream. The openings are arranged along the bottom half of the periphery of the bar in order to guarantee equal distribution over the whole width of the reactor. It was surprisingly found that even distribution could be achieved by arranging the openings in a particular pattern. Therefore, in preferred embodiments of the present disclosure, the openings are arranged within a certain area defined by an angle with respect to a vertical plane symmetrically dissecting the distributing part, the angle being preferably 0° to 70°, more preferably 20° to 50°, with respect to a vertical plane symmetrically dissecting the distributing part.

In preferred embodiments of the present disclosure, the openings have a diameter of 0.5 mm to 10 mm, preferably 1.5 mm to 5 mm. The deviating part is arranged at the top of the bars to prevent accumulation of particles on top of the bars. The deviating part preferably comprises a first planar surface and a second planar surface, the surfaces spanning an angle of less than 120°, preferably an angle of 10° to 100°, even more preferred an angle of 30° to 80°.

A further aspect of the present disclosure is a process for carrying out a gas-phase olefin polymerization at temperatures from 20°C to 200°C and pressures from 0.5 MPa to 10 MPa in the presence of a polymerization catalyst in the reactor according to the present disclosure, the process comprising feeding one or more olefins into the reactor, contacting the olefins and the catalyst under reaction conditions in the at least first polymerization zone (1) and the at least second polymerization zone (2) and collecting the polymer product from the at least second polymerization zone (2), wherein the growing polymer particles flow upward through the first polymerization zone (1) under fast fluidization or transport conditions, leave the first polymerization zone (1), and enter the second polymerization zone (2) where the polymer particles flow downward under the action of gravity, leave the second polymerization zone (2) and are at least partially reintroduced into the first polymerization zone (1), thus circulating between the first polymerization zone (1) and the second polymerization zone (2), the second polymerization zone (2) comprising a bed of densified polymer particles. The process is further characterized in that feedstock and/or a barrier stream is introduced into the second polymerization zone (2) through at least one set of bars (4).

In preferred embodiments of the process, the polymerization is a homopolymerization of ethylene or a copolymerization of ethylene and one or more other olefins selected from the group consisting of 1-butene, 1-hexene and 1-octene or the polymerization is a homopolymerization of propylene or a copolymerization of propylene and one or more olefins selected from the group of ethylene, 1-butene, 1-hexene and 1-octene.

The process is preferably a process for preparing an olefin polymer comprising homo-polymerizing an olefin or copolymerizing an olefin and one or more other olefins at temperatures from 20°C to 200°C and pressures from 0.5 MPa to 10 MPa in the presence of a polymerization catalyst, wherein the polymerization is carried out in a reactor according to the present disclosure.

The reactor of the present disclosure may be operated at pressures from 0.5 MPa to 10 MPa, preferably from 1.0 MPa to 8 MPa and in particular from 1.5 MPa to 4 MPa, wherein these pressures, as all pressures given in the present disclosure, have to be understood as being absolute pressures, i.e. pressure having the dimension MPa (abs). The polymerization is preferably carried out at temperatures from 30°C to 160°C, particularly preferably from 65°C to 125°C.

In preferred embodiment of the present disclosure, the pressure difference between the pressure of the reaction gas in the second polymerization zone (2) and the pressure of the feedstock and/or barrier stream in the hollow space (41) is from 1 to 500 kPa, preferably from 5 to 200 kPa and in particular from 10 to 100 kPa.

In preferred embodiment of the present disclosure, the velocity of the feedstock and/or barrier stream passing through the openings (6) at the bottom of the bars (4) is from 1 to 50 m/s, preferably from 5 to 40 m/s and in particular from 10 to 20 m/s.

The polymerization in the reactor may also be carried out in a condensing or super-condensing mode, in which part of the circulating reaction gas mixture is cooled to below the dew point and returned to the first polymerization zone either separately as a liquid and a gas-phase or together as a two-phase mixture in order to make additional use of the enthalpy of vaporization for cooling the reaction gas.

In preferred embodiments, the polymerization is carried out in the presence of an inert gas such as nitrogen or an alkane having from 1 to 10 carbon atoms such as methane, ethane, propane, n-butane, isobutane, n-pentane, isopentane or n-hexane or mixtures thereof. The use of nitrogen or propane as inert gas, if appropriate in combination with further alkanes, is preferred. In especially preferred embodiments, the polymerization is carried out in the presence of a C₃-C₅ alkane as polymerization diluent and most preferably in the presence of propane, especially in the case of homopolymerization or copolymerization of ethylene. In preferred embodiments of the present disclosure, the reaction gas mixture has a content of inert components from 30 to 99 vol.%, more preferably from 40 to 95 vol.%, and especially from 45 to 85 vol.%. In other preferred embodiments of the present disclosure, especially if the main monomer is propylene, no or only minor amounts of inert diluent are added.

The reaction gas mixtures within the apparatus additionally comprise the olefins to be polymerized, i.e. a main monomer and one or more optional comonomers. The reaction gas mixture may further comprise additional components such as antistatic agents or molecular weight regulators like hydrogen. The components of the reaction gas mixture may be fed into the polymerization zones or into the gas recycle line in gaseous form or as liquid which then vaporizes within the polymerization zones or gas the recycle line.

The polymerization of olefins can be carried out using all customary olefin polymerization catalysts. That means the polymerization can be carried out, using Ziegler- or Ziegler-Natta-catalysts, using Phillips catalysts based on chromium oxide or using single-site catalysts. For the purposes of the present disclosure, single-site catalysts are catalysts based on chemically uniform transition metal coordination compounds. Furthermore, it is also possible to use mixtures of two or more of these catalysts for the polymerization of olefins. Such mixed catalysts are often designated as hybrid catalysts. The preparation and use of these catalysts for olefin polymerization are generally known.

Preferred catalysts are of the Ziegler or Ziegler-Natta type preferably comprising a compound of titanium or vanadium, a compound of magnesium and optionally an electron donor compound and/or a particulate inorganic oxide as a support material.

Catalysts of the Ziegler or Ziegler-Natta type are usually polymerized in the presence of a cocatalyst. Preferred cocatalysts are organometallic compounds of metals of Groups 1, 2, 12, 13 or 14 of the Periodic Table of Elements, in particular organometallic compounds of metals of Group 13 and especially organoaluminum compounds. Preferred cocatalysts are for example organometallic alkyls, organometallic alkoxides, or organometallic halides.

Preferred organometallic compounds comprise lithium alkyls, magnesium or zinc alkyls, magnesium alkyl halides, aluminum alkyls, silicon alkyls, silicon alkoxides and silicon alkyl halides. More preferably, the organometallic compounds comprise aluminum alkyls and magnesium alkyls. Still more preferably, the organometallic compounds comprise aluminum alkyls, most preferably trialkylaluminum compounds or compounds of this type in which an alkyl group is replaced by a halogen atom, for example by chlorine or bromine. Examples of such aluminum alkyls are trimethylaluminum, triethylaluminum, tri-isobutylaluminum, tri-n-hexylaluminum or diethylaluminum chloride or mixtures thereof.

In further preferred embodiments of the present disclosure, the polymerization is a polymerization in a reactor which is a part of a series of polymerization reactors, wherein also one or more polymerizations in other gas-phase reactors of the series of polymerization reactors may be polymerizations according to the present disclosure. Suitable combinations of such polymerizations reactors include a fluidized-bed reactor followed by a reactor according to the present disclosure or a reactor according to the present disclosure followed by a fluidized-bed reactor.

## Claims

1. A reactor for carrying out a gas-phase olefin polymerization in the presence of a polymerization catalyst, the reactor comprising at least a first polymerization zone (1) adapted and arranged for growing polymer particles to flow upward under fast fluidization or transport conditions and at least a second polymerization zone (2) adapted and arranged for the growing polymer particles to flow downward; and at least one set of bars (4) for introducing feedstock and/or a barrier stream into the second polymerization zone (2), wherein each bar (4) comprises a hollow space (41) along the length of the bar (4) for conveying the feedstock and/or barrier stream within the bar and has a particle deviating top for preventing accumulation of the polymer particles on the bars (4), and wherein each bar (4) has openings (6) for distributing the feedstock and/or barrier stream, the openings (6) being arranged along the bottom half of the periphery (42) of the bar (4), **characterized in that** the particle deviating top of the bar (4) includes a top edge (43) which extends along the length of the bar (4).

2. The reactor of claim 1, wherein the bottom half of the periphery (42) of the bar (4) has a particle deviating shape including a bottom edge which extends along the length of the bar (4).

3. The reactor of any of claims 1 or 2, wherein each bar (4) comprises a distributing part (44) for distributing the feedstock and/or barrier stream and a deviating part (45) which forms the particle deviating top of the bars (4), and the distributing part (44) is preferably in the shape of a pipe.

4. The reactor of claim 3, wherein the distributing part (44) is a pipe having a diameter of 25 mm to 100 mm.

5. The reactor of any of claims 1 to 4, wherein the hollow space (41) comprised in the bar (4) has a center axis (411) which runs along the length of the bar (4), and the openings (6) are arranged within the part of the bottom half of the periphery (42) of the bar (4) where an angle (A41, A41') between a vertical plane (v) through the center axis (411) and a plane passing through an opening (6) and the center axis (411) is from 0° to 70°, preferably from 20° to 50°.

6. The reactor of any of claims 1 to 5, wherein the openings (6) have a diameter of 0.5 mm to 10 mm, preferably 1.5 mm to 5 mm.

7. The reactor of any of claims 1 to 6, wherein the particle deviating top of the bar (4) comprises a first planar surface (46a) and a second planar surface (46b) and the intersection of the first planar surface (46a) and the second planar surface (46b) forms the top edge (43), and the dihedral angle (A42) between the surfaces (46a, 46b) is less than 120°, preferably from 10° to 100°, even more preferred from 30° to 80°.

8. The reactor of any of the forgoing claims, wherein the bars (4) of the at least one set of bars are arranged to extend across a part of the width of the second polymerization zone (2) from one side and across a part of the width of the second polymerization zone (2) from the opposite side, leaving a gap between the opposing bars (4).

9. The reactor of any of the forging claims, further comprising at least one set of supports (5) for supporting the bars (4), preferably for supporting the bars (4) for introducing a barrier stream.

10. The reactor of any of the forgoing claims, wherein one end of the bars (4) and/or the supports (5) is adapted to be form-fittingly connected to the wall (7) of the second polymerization zone (2).

11. The reactor of any of the forgoing claims, wherein the bars (4) and/or supports (5) have a surface roughness Ra of no more than 5 µm, preferably 0.1 µm to 5 µm, in particular 0.5 µm to 4 µm, determined according to DIN ISO 25178.

12. A bar for introducing feedstock and/or a barrier stream into a multizone circulating reactor (MZCR), the bar comprising a hollow space along the length of the bar for conveying the feedstock and/or the barrier stream within the bar, having a particle deviating top for preventing accumulation of the polymer particles on the bar, and having openings for distributing the feedstock and/or barrier stream, the openings being arranged along the bottom half of the periphery of the bar **characterized in that** the particle deviating top of the bar (4) includes a top edge (43) which extends along the length of the bar (4).

13. A process for carrying out a gas-phase olefin polymerization at temperatures from 20°C to 200°C and pressures from 0.5 MPa to 10 MPa in the presence of a polymerization catalyst in the reactor of any of claims 1 to 11, the process comprising feeding one or more olefins into the reactor, contacting the olefins and the catalyst under reaction conditions in the at least first polymerization zone (1) and the at least second polymerization zone (2) and collecting the polymer product from the at least second polymerization zone (2), wherein the growing polymer particles flow upward through the first polymerization zone (1) under fast fluidization or transport conditions, leave the first polymerization zone (1), and enter the second polymerization zone (2) where the polymer particles flow downward under the action of gravity, leave the second polymerization zone (2) and are at least partially reintroduced into the first polymerization zone (1), thus circulating between the first polymerization zone (1) and the second polymerization zone (2), and the second polymerization zone (2) comprises a bed of densified polymer particles, and wherein feedstock and/or a barrier stream is introduced into the second polymerization zone (2) through at least one set of bars (4).

14. The process of claim 13, wherein the pressure difference between the pressure of the reaction gas in the second polymerization zone (2) and the pressure of the feedstock and/or barrier stream in the hollow space (41) is from 1 to 500 kPa, preferably from 5 to 200 kPa and in particular from 10 to 100 kPa.

## Patentansprüche

1. Reaktor zum Durchführen einer Olefinpolymerisation in der Gasphase in Gegenwart eines Polymerisationskatalysators, wobei der Reaktor mindestens eine erste Polymerisationszone (1), die so eingerichtet und angeordnet ist, dass wachsende Polymerpartikel unter raschen Verwirbelungs- oder Transportbedingungen aufwärts fließen, und mindestens eine zweite Polymerisationszone (2), die so eingerichtet und angeordnet ist, dass die wachsenden Polymerpartikel abwärts fließen; und mindestens einen Satz von Stäben (4) zum Einbringen von Einsatzmaterial und/oder einem Barrierestrom in die zweite Polymerisationszone (2) umfasst, wobei jeder Stab (4) einen Hohlraum (41) entlang der Länge des Stabs (4) umfasst, um das Einsatzmaterial und/oder den Barrierestrom innerhalb des Stabs zu fördern, und einen partikelablenkenden oberen Bereich aufweist, um Akkumulation der Polymerpartikel auf den Stäben (4) zu verhindern, und wobei jeder Stab (4) Öffnungen (6) zum Verteilen des Einsatzmaterials und/oder Barrierestroms aufweist, wobei die Öffnungen (6) entlang der unteren Hälfte der Peripherie (42) des Stabs (4) angeordnet sind, **dadurch gekennzeichnet, dass** der partikelablenkende obere Bereich des Stabs (4) eine obere Kante (43) einschließt, die sich entlang der Länge des Stabs (4) erstreckt.

2. Reaktor nach Anspruch 1, wobei die untere Hälfte der Peripherie (42) des Stabs (4) eine partikelablenkende Form aufweist, einschließlich einer unteren Kante, die sich entlang der Länge des Stabs (4) erstreckt.

3. Reaktor nach einem der Ansprüche 1 oder 2, wobei jeder Stab (4) ein Verteilungsteil (44) zum Verteilen des Einsatzmaterials und/oder Barrierestroms und ein Ablenkungsteil (45) umfasst, das den partikelablenkenden oberen Bereich der Stäbe (4) bildet, und wobei das Verteilungsteil (44) vorzugsweise in Form eines Rohrs vorliegt.

4. Reaktor nach Anspruch 3, wobei das Verteilungsteil (44) ein Rohr mit einem Durchmesser von 25 mm bis 100 mm ist.

5. Reaktor nach einem der Ansprüche 1 bis 4, wobei der Hohlraum (41), der in dem Stab (4) enthalten ist, eine Mittelachse (411) aufweist, die entlang der Länge des Stabs (4) verläuft, und die Öffnungen (6) innerhalb des Teils der unteren Hälfte der Peripherie (42) des Stabs (4) angeordnet sind, wobei ein Winkel (A41, A41') zwischen einer vertikalen Ebene (v) durch die Mittelachse (411) und einer Ebene, die durch eine Öffnung (6) und die Mittelachse (411) verläuft, 0° bis 70°, vorzugsweise 20° bis 50° beträgt.

6. Reaktor nach einem der Ansprüche 1 bis 5, wobei die Öffnungen (6) einen Durchmesser von 0,5 mm bis 10 mm, vorzugsweise 1,5 mm bis 5 mm aufweisen.

7. Reaktor nach einem der Ansprüche 1 bis 6, wobei der partikelablenkende obere Bereich des Stabs (4) eine erste planare Oberfläche (46a) und eine zweite planare Oberfläche (46b) umfasst, und der Schnitt der ersten planaren Oberfläche (46a) und der zweiten planaren Oberfläche (46b) die obere Kante bildet (43), und der Diederwinkel (A42) zwischen den Oberflächen (46a, 46b) kleiner als 120°, vorzugsweise 10° bis 100°, noch bevorzugter 30° bis 80° ist.

8. Reaktor nach einem der vorhergehenden Ansprüche, wobei die Stäbe (4) des mindestens einen Satzes von Stäben so angeordnet sind, dass sie sich über einen Teil der Breite der zweiten Polymerisationszone (2) von einer Seite und über einen Teil der Breite der zweiten Polymerisationszone (2) von der Gegenseite erstrecken, wodurch ein Spalt zwischen den gegenüber liegenden Stäben (4) belassen wird.

9. Reaktor nach einem der vorhergehenden Ansprüche, des Weiteren umfassend mindestens einen Satz von Stützen (5) zum Stützen der Stäbe (4), vorzugsweise zum Stützen der Stäbe (4) zum Einbringen eines Barrierestroms.

10. Reaktor nach einem der vorhergehenden Ansprüche, wobei ein Ende der Stäbe (4) und/oder der Stützen (5) eingerichtet ist, um formschlüssig mit der Wand (7) der zweiten Polymerisationszone (2) verbunden zu werden.

11. Reaktor nach einem der vorhergehenden Ansprüche, wobei die Stäbe (4) und/oder Stützen (5) eine Oberflächenrauheit Ra von nicht mehr als 5 µm, vorzugsweise 0,1 µm bis 5 µm, insbesondere 0,5 µm bis 4 µm aufweisen, bestimmt gemäß DIN ISO 25178.

12. Stab zum Einbringen von Einsatzmaterial und/oder einem Barrierestrom in einen mehrzonigen Zirkulationsreaktor (MZCR), wobei der Stab einen Hohlraum entlang der Länge des Stabs zum Fördern des Einsatzmaterials und/oder des Barrierestroms innerhalb des Stabs umfasst, mit einem partikelablenkenden oberen Bereich, um Akkumulation der Polymerpartikel auf dem Stab zu verhindern, und mit Öffnungen zum Verteilen des Einsatzmaterials und/oder Barrierestroms, wobei die Öffnungen entlang der unteren Hälfte der Peripherie des Stabs angeordnet sind, **dadurch gekennzeichnet, dass** der partikelablenkende obere Bereich des Stabs (4) eine obere Kante (43) einschließt, die sich entlang der Länge des Stabs (4) erstreckt.

13. Verfahren zum Durchführen einer Olefinpolymerisation in der Gasphase bei Temperaturen von 20 °C bis 200 °C und Drücken von 0,5 MPa bis 10 MPa in Gegenwart eines Polymerisationskatalysators in dem Reaktor gemäß einem der Ansprüche 1 bis 11, wobei das Verfahren Einspeisen von einem oder mehreren Olefinen in den Reaktor, Kontaktieren der Olefine und des Katalysators unter Reaktionsbedingungen in der mindestens ersten Polymerisationszone (1) und der mindestens zweiten Polymerisationszone (2) und Auffangen des Polymerprodukts aus der mindestens zweiten Polymerisationszone (2) umfasst, wobei die wachsenden Polymerpartikel durch die erste Polymerisationszone (1) unter raschen Verwirbelungs- oder Transportbedingungen aufwärts fließen, die erste Polymerisationszone (1) verlassen und in die zweite Polymerisationszone (2) eintreten, wo die Polymerpartikel unter Wirkung der Schwerkraft abwärts fließen, die zweite Polymerisationszone (2) verlassen und mindestens teilweise erneut in die erste Polymerisationszone (1) eingebracht werden, wodurch sie zwischen der ersten Polymerisationszone (1) und der zweiten Polymerisationszone (2) zirkulieren, und die zweite Polymerisationszone (2) ein Bett aus verdichteten Polymerpartikeln umfasst, und wobei Einsatzmaterial und/oder ein Barrierestrom durch mindestens einen Satz von Stäben (4) in die zweite Polymerisationszone (2) eingebracht wird.

14. Verfahren nach Anspruch 13, wobei die Druckdifferenz zwischen dem Druck des Reaktionsgases in der zweiten Polymerisationszone (2) und dem Druck des Einsatzmaterials und/oder Barrierestroms in dem Hohlraum (41) 1 bis 500 kPa, vorzugsweise 5 bis 200 kPa und insbesondere 10 bis 100 kPa beträgt.

## Revendications

1. Réacteur pour la mise en œuvre d'une polymérisation d'oléfines en phase gazeuse en présence d'un catalyseur de polymérisation, le réacteur comprenant au moins une première zone de polymérisation (1) conçue et agencée pour l'écoulement vers le haut de particules polymères en croissance dans des conditions de fluidisation ou de transport rapides et au moins une seconde zone de polymérisation (2) conçue et agencée pour l'écoulement vers le bas des particules polymères en croissance ; et au moins un ensemble de barres (4) destinées à introduire une charge d'alimentation et/ou un flux barrière dans la seconde zone de polymérisation (2), chaque barre (4) comprenant un espace creux (41) le long de la longueur de la barre (4) destiné à transporter la charge d'alimentation et/ou le flux barrière à l'intérieur de la barre et présentant une partie supérieure de déviation de particules destinée à empêcher l'accumulation des particules polymères sur les barres (4) et chaque barre (4) présentant des ouvertures (6) destinées à distribuer la charge d'alimentation et/ou le flux barrière, les ouvertures (6) étant agencées le long de la moitié inférieure de la périphérie (42) de la barre (4), **caractérisé en ce que** la partie supérieure de déviation de particules de la barre (4) comprend un bord supérieur (43) qui s'étend le long de la longueur de la barre (4).

2. Réacteur selon la revendication 1, la moitié inférieure de la périphérie (42) de la barre (4) présentant une forme de déviation de particules comprenant un bord inférieur qui s'étend le long de la longueur de la barre (4).

3. Réacteur selon l'une quelconque des revendications 1 ou 2, chaque barre (4) comprenant une partie de distribution (44) destinée à distribuer la charge d'alimentation et/ou le flux barrière et une partie de déviation (45) qui forme la partie supérieure de déviation de particules des barres (4) et la partie de distribution (44) étant de préférence sous la forme d'un tuyau.

4. Réacteur selon la revendication 3, la partie de distribution (44) étant un tuyau présentant un diamètre de 25 mm à 100 mm.

5. Réacteur selon l'une quelconque des revendications 1 à 4, l'espace creux (41) situé dans la barre (4) présentant un axe central (411) qui s'étend le long de la longueur de la barre (4) et les ouvertures (6) étant agencées à l'intérieur de la partie de la moitié inférieure de la périphérie (42) de la barre (4) où un angle (A41, A41') entre un plan vertical (v) à travers l'axe central (411) et un plan passant à travers une ouverture (6) et l'axe central (411) est de 0° à 70°, de préférence de 20° à 50°.

6. Réacteur selon l'une quelconque des revendications 1 à 5, les ouvertures (6) présentant un diamètre de 0,5 mm à 10 mm, de préférence de 1,5 mm à 5 mm.

7. Réacteur selon l'une quelconque des revendications 1 à 6, la partie supérieure de déviation de particules de la barre (4) comprenant une première surface plane (46a) et une seconde surface plane (46b) et l'intersection de la première surface plane (46a) et de la seconde surface plane (46b) formant le bord supérieur (43) et l'angle dièdre (a42) entre les surfaces (46a, 46b) étant inférieur à 120°, de préférence de 10° à 100°, encore plus préférablement de 30° à 80°.

8. Réacteur selon l'une quelconque des revendications précédentes, les barres (4) dudit au moins un ensemble de barres étant agencées pour s'étendre sur une partie de la largeur de la seconde zone de polymérisation (2) à partir d'un côté et sur une partie de la largeur de la seconde zone de polymérisation (2) à partir du côté opposé, laissant un interstice entre les barres (4) opposées.

9. Réacteur selon l'une quelconque des revendications précédentes, comprenant en outre au moins un ensemble de supports (5) destinés à supporter les barres (4), de préférence à supporter les barres (4) pour l'introduction d'un flux barrière.

10. Réacteur selon l'une quelconque des revendications précédentes, une extrémité des barres (4) et/ou des supports (5) étant conçue pour être reliée par liaison de forme à la paroi (7) de la seconde zone de polymérisation (2).

11. Réacteur selon l'une quelconque des revendications précédentes, les barres (4) et/ou les supports (5) présentant une rugosité de surface Ra inférieure ou égale à 5 µm, de préférence de 0,1 µm à 5 µm, en particulier de 0,5 µm à 4 µm, déterminée selon la norme DIN ISO 25178.

12. Barre d'introduction d'une charge d'alimentation et/ou d'un flux barrière dans un réacteur à circulation multizone (RCMZ), la barre comprenant un espace creux le long de la longueur de la barre, destiné à transporter la charge d'alimentation et/ou le flux barrière à l'intérieur de la barre, présentant une partie supérieure de déviation de particules destinée à empêcher l'accumulation des particules polymères sur la barre et présentant des ouvertures destinées à distribuer la charge d'alimentation et/ou le flux barrière, les ouvertures étant agencées le long de la moitié inférieure de la périphérie de la barre, **caractérisée en ce que** la partie supérieure de déviation de particules de la barre (4) comprend un bord supérieur (43) qui s'étend sur la longueur de la barre (4).

13. Procédé pour la mise en œuvre d'une polymérisation d'oléfines en phase gazeuse à des températures de 20 °C à 200 °C et à des pressions de 0,5 MPa à 10 MPa en présence d'un catalyseur de polymérisation dans le réacteur selon l'une quelconque des revendications 1 à 11, le procédé comprenant l'introduction d'une ou de plusieurs oléfines dans le réacteur, la mise en contact des oléfines et du catalyseur dans des conditions de réaction dans ladite au moins une première zone de polymérisation (1) et ladite au moins une seconde zone de polymérisation (2) et la collecte du produit polymère à partir de ladite au moins une seconde zone de polymérisation (2), les particules polymères en croissance s'écoulant vers le haut à travers la première zone de polymérisation (1) dans des conditions de fluidisation ou de transport rapides, quittant la première zone de polymérisation (1) et entrant dans la seconde zone de polymérisation (2) où les particules polymères s'écoulent vers le bas sous l'action de la gravité, quittant la seconde zone de polymérisation (2) et étant au moins partiellement réintroduites dans la première zone de polymérisation (1), circulant ainsi entre la première zone de polymérisation (1) et la seconde zone de polymérisation (2) et la seconde zone de polymérisation (2) comprenant un lit de particules polymères densifiées et la charge d'alimentation et/ou un flux barrière étant introduit(e)(s) dans la seconde zone de polymérisation (2) par l'intermédiaire d'au moins un ensemble de barres (4).

14. Procédé selon la revendication 13, la différence de pression entre la pression du gaz de réaction dans la seconde zone de polymérisation (2) et la pression de la charge d'alimentation et/ou du flux barrière dans l'espace creux (41) étant de 1 à 500 kPa, de préférence de 5 à 200 kPa et en particulier de 10 à 100 kPa.
